# EUROPEAN PATENT SPECIFICATION

(11) **EP 4 560 852 B1**
(45) Date of publication and mention of the grant of the patent: **14.10.2026**
(21) Application number: 24221135.7
(22) Date of filing: 28.06.2022
(51) Int. Cl.: G02F 1/35, H01S 5/00

(54) **AN OPTICAL RESONATOR FREQUENCY COMB**
FREQUENZKAMM EINES OPTISCHEN RESONATORS
PEIGNE DE FRÉQUENCES DE RÉSONATEUR OPTIQUE

(30) Priority: 08.07.2021 SE 2150920
(43) Date of publication of application: 28.05.2025
(62) Document number(s) of the earlier application(s) in accordance with Art. 76 EPC: 22181501.2 / 4 116 767
(73) Proprietor: Solinide Photonics AB, 433 34 Partille (SE)
(72) Inventor: BJARKI HELGASON, Oskar, 433 46 Partille (SE); TORRES COMPANY, Victor, 412 62 Göteborg (SE)
(74) Representative: Lind Edlund Kenamets Intellectual Property AB

(56) References cited:
- US-A1- 2018 083 599
- US-A1- 2018 196 198
- MOHAMMAD SOLTANI ET AL: "Enabling arbitrary wavelength frequency combs on chip : Enabling arbitrary wavelength frequency combs on chip", LASER & PHOTONICS REVIEWS, vol. 10, no. 1, 1 January 2016 (2016-01-01), DE, pages 158 - 162, XP055440273, ISSN: 1863-8880, DOI: 10.1002/lpor.201500226

## Description

### TECHNICAL FIELD

The present disclosure relates to optical resonator frequency comb having a high power conversion efficiency.

### BACKGROUND

In the technical field of optical resonator frequency combs, dissipative Kerr solitons (DKSs) in high-Q Kerr-nonlinear resonators have attracted immense attention over the last years. Driven by a continuous wave (CW) laser, DKSs are maintained through a balance between optical losses and parametric gain. If this balance is maintained, the solitary waveforms can circulate in the resonator indefinitely without changing shape. As a result, a train of optical pulses are coupled out of the resonator, which corresponds to a coherent optical frequency comb. Such soliton microcombs present new opportunities for several applications, such as telecommunications, lidar, optical clocks, frequency synthesis, microwave photonics, spectroscopy and more.

The bulk of microcomb DKS studies have so far been conducted using a single anomalous dispersion resonator. Such cavities can generate a hyperbolic-secant DKS, whose coherence and robustness has been proven by multiple demonstrations. However, one of the main drawbacks of these waveforms is their limited conversion efficiency.

A few solutions have been suggested to circumvent this limited conversion efficiency. One approach is to employ normal dispersion microcavites, which offer much higher conversion efficiency. However, DKS's generated in the anomalous dispersion regime have remained with low conversion efficiency.

US2018083599 relates to a signal processing apparatus, being configured for transmitting and receiving coherent parallel optical signals, comprising a transmitter apparatus including a first single soliton micro-resonator device and a modulator device, wherein the first single soliton micro-resonator device is adapted for creating a single soliton providing a first frequency comb.

DOI 10.1002/ipor.201500226 Mohammad Soltani *et. al* to a generalized dispersion engineering technique based on strong coupling of compound ring resonators to achieve anomalous group velocity dispersion.

US20180196198 relates to an optoelectronic device for generation of a frequency comb comprising: a laser source, an optical micro-resonator, comprising a resonant ring, at least one waveguide optically coupled to the resonant ring, having an effective index associated with a fundamental optical mode supported by the filtering guide equal to an effective index associated with an optical higher order mode supported by the resonant ring.

### SUMMARY

An object of the present disclosure is to provide an optical resonator frequency comb and associated methods for operating and initiating such a comb, where the previously mentioned problems are avoided. This object is at least partly achieved by the features of the independent claims. The dependent claims contain further developments of the optical resonator frequency comb and associated methods.

A first aspect of the present disclosure is defined in claim 1. The auxiliary optical element is configured to induce a frequency shift to a longitudinal frequency mode of the main optical resonator associated with the cw laser frequency, thereby enhancing the conversion efficiency of a generated frequency comb.

A second aspect of the present disclosure is defined in claim 13.The auxiliary optical element induces a frequency shift to a longitudinal frequency mode of the main optical resonator associated with the cw laser frequency, thereby enhancing the conversion efficiency of a generated frequency comb.

The optical resonator frequency comb may have an auxiliary optical element in form of an auxiliary resonator, and an auxiliary heater for tuning of a resonance frequency of the auxiliary resonator.

The method may further comprise increasing power of an auxiliary heater for inducing a frequency shift to a longitudinal frequency mode of the main optical resonator, the longitudinal frequency mode being associated with the cw laser frequency, and thereby enhancing the conversion efficiency of a generated frequency comb and thereafter attenuating the power of the cw laser light.

One of the main causes why DKS's generated in the anomalous dispersion have low conversion efficiency is that they require the CW pump laser frequency to be effectively detuned far to the red side of resonance, resulting in much of the CW power bypassing the resonator. Specifically, while the comb power tends to increase as the pump is tuned more towards red, the CW level will decrease in the resonator, to the point where it can no longer maintain the DKS.

The solution according to the disclosure provides a solution to this problem by introducing a phase shift of a longitudinal mode associated with the cw laser frequency. The phase shift enables the cw laser to operate more close to a resonance frequency of the main resonator, i.e. enabling the pump to be effectively detuned closer to resonance center, thereby improving the coupling efficacy between the cw laser and main resonator.

Experiments with a single DKS show conversion efficiency of >50%. Such high conversion efficiency is especially appealing for optical telecommunications. Furthermore, this photonic molecule design can introduce other useful dynamics, e.g. with regards to soliton initiation and stability, that deserve thorough investigations in the future.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

### BRIEF DESCRIPTION OF DRAWINGS

The optical frequency comb according to the disclosure will be described in detail in the following, with reference to the attached drawings, in which
- Fig. 1A-D: show prior art solution,
- Fig. 2A-D: show an example embodiment of the new design with mode phase shift,
- Fig. 3A-G: show various alternative embodiments for generating the desired phase shift,
- Fig. 4: shows resonance split of the hybridized pumped mode,
- Fig. 5: shows measured integrated dispersion of main resonator,
- Fig. 6: shows measured and simulated spectrum coupled from the main resonator,
- Fig. 7A-B: shows the main steps of the methods of the present disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

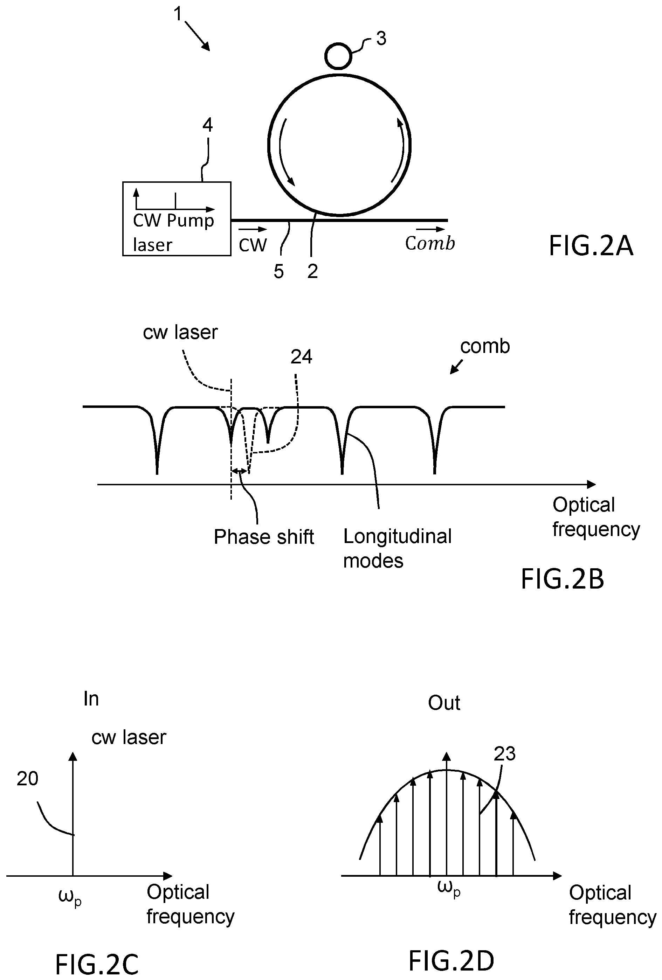

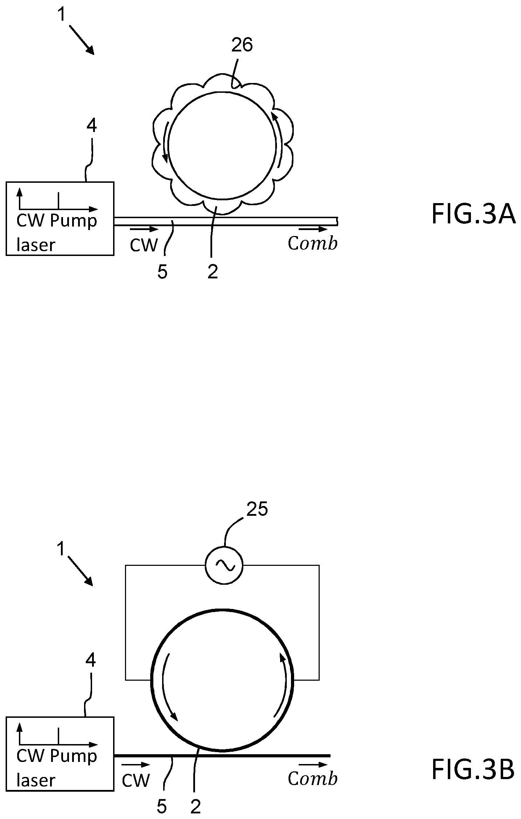

With reference to figures 2A and 3A-G, an optical resonator frequency comb 1 with higher than 50% comb power conversion efficiency is disclosed. The resonator frequency comb 1 originates from a dissipative Kerr soliton (DKS) circulating in linearly-coupled anomalous-dispersion resonator 2.

An optical resonator is an optical cavity that presents a set of longitudinal modes or resonances. The resonator is made of an anomalous dispersion waveguide so that it can support the formation of a temporal soliton.

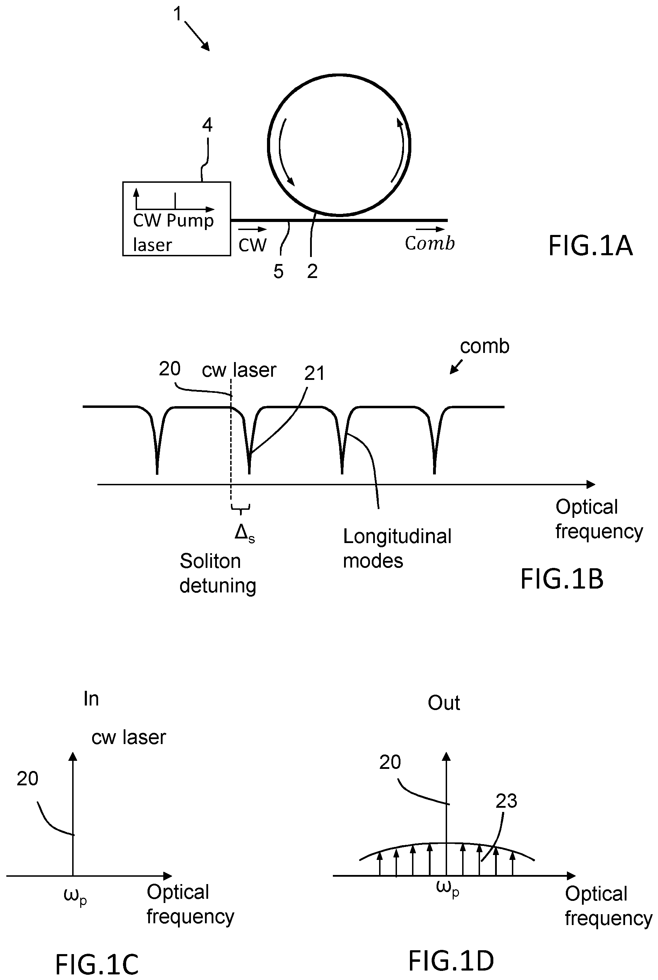

Figure 1A schematically shows a prior art design of the optical frequency comb 1, which includes a continuous wave (CW) laser source 4 supplying continuous laser light to an optical waveguide 5 that extends past and in close vicinity of a single unperturbed main optical resonator 2. The main optical resonator 2, which is also known as resonator cavity, or simply cavity, is made of third-order (Kerr) nonlinear material and is arranged for being linearly coupled to the optical waveguide 5 when laser light is supplied from the laser to the optical waveguide 5 for formation of dissipative solitons (DKSs) in the main resonator and for generating a frequency comb that is supplied at the end of the optical waveguide 5.

Optical resonators are microscale or millimetre scale cavities that confine light by resonant recirculation. They may have a size of for example tenth to hundreds micrometres in their main direction of extension, such as diameter, or being even larger, such as up in the millimetre range. The resonators can be arranged in coupled arrays, with the dimensions of the unit cell precisely engineered, for example by means of lithography. Small-volume optical resonators with high quality (Q) factors enables large build-up of the intracavity intensity using low-power continuous-wave (c.w.) lasers. For example, formation of a dissipative soliton (DKS), which is a selfenforcing solitary wave in nonlinear dissipative systems subject to an external energy supply, is possible. DKS may exist in resonators with normal as well as anomalous dispersion and exhibit a rich diversity of soliton dynamics. In the time domain, a DKS corresponds to a localized waveform circulating at a rate commensurate to the cavity free spectral range (FSR).

One problem with the prior art type of combs is the relatively low comb power conversion efficiency, i.e. ratio of power of the components of the comb being generated by the frequency comb and power being inputted by the cw laser 4 into the optical waveguide 5.

With reference to figure 1B, a single ideal (unperturbed) resonator displays a set of longitudinal modes (resonant optical frequencies). When the resonator is designed with anomalous dispersion, the relative distance between consecutive modes increases with optical frequency (that is, blue components travel faster than red ones). In this case, the optical resonator can generate an optical soliton when subject to a continuous-wave laser tuned closely to one of the longitudinal modes (see for example Herr et al. Nature Photonics 8, 145 (2014). The problem is that the CW laser cannot be on resonance with one of the longitudinal modes because it must be reddetuned from the longitudinal mode that it pumps for the soliton to exist, as schematically illustrated in figure 1B, which shows the laser frequency 20 being offset from an adjacent longitudinal mode 21.

This offset, also referred to as soliton detuning, results into inefficient coupling of CW power into the resonance when the soliton exists in the resonator (see Xue et al. Laser & Photonic Reviews 11, 1600276 (2017)). As a result, the power conversion efficiency of soliton microcombs is low, typically ~1%.

This relatively low power conversion efficiency is described with reference to schematically illustrated figures 1C-D, wherein figure 1C shows the input to the main resonator 2 in form of a cw laser light having a certain frequency ωₚ being supplied by the cw laser 4 to the optical waveguide 5, and figure 1D shows the output of the main resonator 2 in form of a comb 23 having a plurality of components with relatively low amplitude1, superposed with a portion of the input cw laser light.

The present disclosure provides a solution to this problem by providing the resonator with a physical perturbation that results in a frequency shift of one or more of the longitudinal modes with respect to the frequency location in absence of coupling. The perturbation is such that the induced frequency shift compensates partially the inherent pump frequency detuning when the soliton would be formed in the unperturbed cavity. The perturbation thus results into a more efficient coupling of the CW laser light into the resonator when the soliton is generated into the main cavity. The overall power conversion efficiency (extracted comb power excluding the pump/input pump power) may be higher than 10%. Thus, aspects and embodiments of the present disclosure provide an optical resonator frequency comb comprising a main optical resonator being made of a resonator material, which has a third order nonlinearity and an anomalous resonator dispersion, and a continuous wave (cw) laser configured for supplying continuous laser light into an optical waveguide, which is coupled with the main optical resonator. The cw laser, the optical waveguide and the main optical resonator may be arranged for resonantly coupling the cw laser light into the main optical resonator for forming a single dissipative soliton circulating in the main optical resonator corresponding to the generation of a frequency comb. The optical resonator frequency comb may further comprise an auxiliary optical element configured to induce a frequency shift to a longitudinal frequency mode of the main optical resonator associated with the cw laser frequency, thereby enhancing the conversion efficiency of a generated frequency comb. Thus, the solution of the present disclosure could induce the desired frequency shift onto at least one longitudinal mode of the main optical resonator, the longitudinal mode being associated with the cw laser frequency. The frequency shift enables the cw laser to operate more close to a resonance frequency of the main resonator, i.e. enabling the pump to be effectively detuned closer to resonance center, thereby improving the coupling efficacy between the cw laser and main resonator. In other words, the CW pump power can be more efficiently coupled into the resonator while the soliton is generated into the cavity, because the frequency of the CW laser can be located closer to the frequency of the frequency-shifted longitudinal mode in the perturbed cavity. This way the advantageous effect of enhanced power conversion efficiency can be achieved according to the present disclosure.

Figure 2A-D schematically shows an example embodiment of the optical resonator frequency comb having a perturbation causing the desired frequency shift of a longitudinal mode, such that resulting longitudinal mode is more aligned with the cw laser frequency.

Specifically, figure 2A shows a main microresonator cavity 2 having anomalous dispersion and hence being in principle susceptible to generate a single soliton when subject to CW laser light. A physical perturbation of the main resonator cavity is here induced by means of an auxiliary resonator 3, such that at least one mode, of the plurality of longitudinal modes, is affected, i.e. phase shifted, as schematically illustrated in figure 2B. The split of the longitudinal mode 21 into two neighbouring modes is sometimes referred to as mode-splitting. The perturbation induces a frequency shift on the natural location 24 of the mode. In this way, the CW pump power can be more efficiently coupled into the resonator while the soliton is generated into the cavity, because the frequency of the CW laser can be located closer to the frequency of the phase shifted longitudinal mode in the perturbed cavity. As a result, the power of the CW laser is more efficiently coupled into the resonance while the soliton is formed. Hence, the power conversion efficiency of > 10% can be attained.

This improved comb power conversion efficiency is illustrated with reference to figures 2C-D, wherein figure 2C shows the input to the main resonator 2 in form of a cw laser light having a certain frequency ωₚ being supplied by the cw laser 4 to the optical waveguide 5, identical with figure 1C. Furthermore, figure 2D shows the output of the main resonator 2 in form of a comb 23 having a plurality of components with relatively high amplitude 23, compared with the superposed portion of the input cw laser light. The large amplitude of the comb components in figure 2D compared with the relatively small amplitude of the comb components in figure 1D show the improvement in terms of power conversion efficiency provided by means of the basic concept underlying the solution disclosed in the present disclosure.

The perturbation can be attained by many different means, e.g. by using an auxiliary resonator with dissimilar free spectral ranges (FSRs), as illustrated in figures 1A and 2A. Some, but not all, such as for example about 1 - 30, specifically 1 - 5, or more specifically a single, longitudinal modes in the absence of coupling would be degenerate in frequency. When the main and auxiliary resonators 2, 3 are placed in close proximity to each other, the mode frequencies that are degenerate will experience coupling and will introduce a doublet. This results in a frequency shift corresponding to the coupling rate between the resonators 2, 3.

Alternatively, as schematically illustrated in figure 3A, the comb may include a single resonator 2 having a grating 26 inscribed along the wall of the resonator 2 for coupling of two counterpropagating transverse modes in the resonator 2. This will induce a doublet along the longitudinal mode defined by the grating period. The strength of the coupling can be controlled by the amplitude of the grating.

Still more alternatively, as schematically illustrated in figure 3B, the resonator 2 may be subject to an external electromagnetic control field. This electromagnetic field could be optical (in virtue of a nonlinear effect via second or third-order nonlinear susceptibility) or radio-frequency if the resonator is made of an electro-optic material. In figure 3B, an electric power source 25 is connected to the main resonator 2 for generating an external electromagnetic control field that may be configured for perturbing at least one longitudinal mode of the main resonator 2.

Other means for accomplishing a perturbation of at least the mode associated with the cw laser may be to induce active modulation with an external RF control signal, such as for example by means of thermal, phononic or acousto-optic modulation. The point is that the external RF field could induce the desired frequency shift onto at least one longitudinal mode.

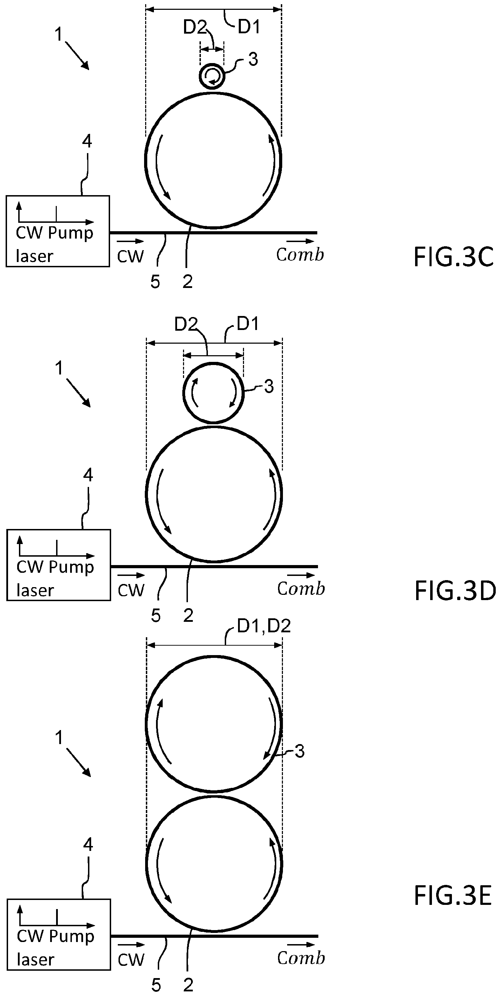

Generating a perturbation of a longitudinal mode by means of an auxiliary resonator, as described above with reference to figures 2A-D, is described more in detail below with reference to figures 3C - 3G.

Specifically, the microcomb 1 and methods for operating or initiating a microcomb according to disclosure involves may use of a photonic molecule, i.e. two linearly coupled resonators 2, 3, to vastly improve the conversion efficiency of a DKS generated in a main optical resonator 2 having anomalous dispersion.

Figure 3C schematically shows a first example embodiment of the microcomb 1, having a main optical resonator 2 made of Kerr-nonlinear material placed in close proximity to an auxiliary resonator 3 made of normal dispersion and anomalous dispersion material and arranged for being linearly coupled to the auxiliary resonator 3 when CW laser light is supplied to the main resonator 2 from a continuous wave (CW) laser source 4 via an optical waveguide 5 that extends past and in close vicinity of the main resonator 2.

Each of the main and auxiliary resonators 2, 3 may be formed by an annular waveguide made of a material suitable for confining light circulating in the waveguide ring. Dispersion herein refers to group velocity dispersion of the waveguide.

By placing the main and auxiliary microresonators 2, 3 in close proximity, the evanescent field of one cavity serves as a perturbation to the field in the adjacent one, resulting in linear coupling. The coupling lifts the frequency degeneracy and manifests in the emergence of a doublet of two new eigenfrequencies, corresponding to the eigenvalues of the supermodes. This arrangement of two microresonators placed in close proximity is often called a 'photonic molecule'. The photonic molecule offers the flexibility of tuning the frequency offset via the thermo-optic effect by placing a heater on top of one of the main and auxiliary microresonators 2, 3. This in turn permits continuous tuning of the location of the degeneracy point and hence the frequency separation of the doublet.

When in operation, the main resonator 2 produces a DKS when one of its resonance, i.e. one of its longitudinal modes, is pumped with a CW laser 4. The auxiliary resonator 3 may be tuned to induce a phase shift to the pump frequency (i.e. via mode-splitting) such that it has an effective detuning close to resonance centre. In other words, the auxiliary resonator may be configured to be tuned to induce a frequency shift to the longitudinal frequency mode of the main optical resonator, the longitudinal frequency mode being associated with the cw laser frequency, such that it has an effective detuning close to resonance centre. This way, the CW laser light is coupled more efficiently to the main resonator 2, resulting in enhanced power conversion efficiency, as described above.

The phase shift of the pumped longitudinal mode of the comb 1 is not required for other comb frequencies. Consequently, modal interaction at other frequencies, i.e. at frequencies different from the pump frequency, may be reduced or even minimized by employing an auxiliary resonator with relatively large resonance separation, i.e. a large free spectral range (FSR). The FSR of a resonator depends on for example the size of the resonator and the resonator material of the waveguide of the resonator. Hence, by for example using a relatively small size auxiliary resonator 3 that inherently has a relatively large FSR, the modal interaction between the main and auxiliary resonators 2, 3 may be reduced, thereby enabling further improvement in comb conversion efficiency.

In the example embodiment depicted in figure 3C, the diameter D1 of the main resonator 2 may be about nine times larger than the diameter D2 of the auxiliary resonator 3, for accomplishing a low level of modal interaction.

In the example embodiment depicted in figure 3D, the diameter D1 of the main resonator 2 may be about twice the size of the diameter D2 of the auxiliary resonator 3, thereby still accomplishing an improved conversion efficiency compared with the prior art designs.

In the example embodiment depicted in figure 3E, the diameter D1 of the main resonator 2 may be substantially equal to the diameter D2 of the auxiliary resonator 3, but the FSR of the auxiliary resonator may still be significantly larger, for example at least twice at large, than the FSR of the main resonator, be appropriate selection of waveguide material of the first and second resonators, thereby still accomplishing an improved conversion efficiency compared with the prior art designs.

In other words, the present disclosure describes an optical resonator frequency comb, comprising: a main optical resonator being made of a resonator material, which has a third order nonlinearity and an anomalous resonator dispersion; a continuous wave (cw) laser configured for supplying continuous laser light into an optical waveguide, which is coupled with the main optical resonator; wherein the cw laser, the optical waveguide and the main optical resonator are arranged for resonantly coupling the cw laser light into the main optical resonator for forming a single dissipative soliton circulating in the main optical resonator corresponding to the generation of a frequency comb; wherein the optical resonator frequency comb further comprises an auxiliary optical element configured to induce a frequency shift to a longitudinal frequency mode of the main optical resonator associated with the cw laser frequency to enhance the conversion efficiency of a generated frequency comb.

For ensuring a relatively high power conversion efficiency, modal interaction may be kept within reasonable limits. For example, the auxiliary optical element may be configured to induce a frequency shift to only a limited portion of all longitudinal frequency modes of the main optical resonator.

Alternatively, the auxiliary optical element may be configured to induce a frequency shift to at least one, but not all, longitudinal modes of the main resonator.

Still more alternatively, the auxiliary optical element may be configured to induce a frequency shift to not more than 30, specifically not more than 10, and more specifically not more than 3 longitudinal modes of the main resonator

Alternatively, for ensuring an even higher comb conversion efficiency, modal interaction may be minimized. This may be accomplished by having the auxiliary optical element configured to induce a frequency shift to only one longitudinal mode of the main resonator.

In some example embodiments, the main optical resonator has a first free spectral range (FSR), the auxiliary optical element is an auxiliary optical resonator having a second free spectral range (FSR) and being positioned adjacent to the main optical resonator for being linearly coupled with the main optical resonator during operation of the optical resonator frequency comb, wherein the second free spectral range is at least three times larger, specifically at least six times larger, and more specifically at least nine times larger, than the first free spectral range. Thereby, modal interaction between the main and auxiliary resonators may be reduced.

Figures 3C-D show frequency combs with different sized auxiliary resonators 3 but same sized main resonators 2, thereby reflecting different levels of modal interaction between the modes of the main and auxiliary resonators 2, 3. In other words, in some example embodiments, the auxiliary optical element is an auxiliary optical resonator being positioned adjacent to the main optical resonator for being linearly coupled with the main optical resonator during operation of the optical resonator frequency comb, wherein the main optical resonator has an annular form with a first diameter and an auxiliary optical resonator has an annular form with a second diameter, wherein the first diameter is at least three times larger, specifically at least six times larger, and more specifically at least nine times larger, than the second diameter. A smaller size auxiliary resonator compared with the main resonator provides reduced modal interaction and thus improved comb conversion efficiency.

As described above, the main and auxiliary resonators 2, 3 may be placed in close proximity to each other, such that an evanescent field of the auxiliary resonator 3 serves as a perturbation to an evanescent field of the main resonator 2, thereby enabling linear coupling between the main and auxiliary resonators 2, 3 during operation of the optical resonator frequency comb 1. For example, a gap distance between the waveguide of the main resonator 2 and the waveguide of the auxiliary microresonator 3 may be about 500 nanometre [nm].

The main and auxiliary resonators 2, 3 may be configured for having a mutual linear coupling during operation of the optical resonator frequency comb, such that the cw laser light that is being fed into the optical waveguide 5 is resonant in both the main and auxiliary resonators 2, 3.

The auxiliary optical resonator 3 may be made of a resonator material, which has a third order nonlinearity and an anomalous resonator dispersion. Alternatively, the auxiliary optical resonator 3 may be made of a resonator material having a normal resonator dispersion.

As illustrated in figures 3A-G, the frequency comb includes a single continuous wave (cw) laser for powering the main resonator with laser light. In other words, the laser light being supplied to, and coupled with, the main resonator includes a single frequency.

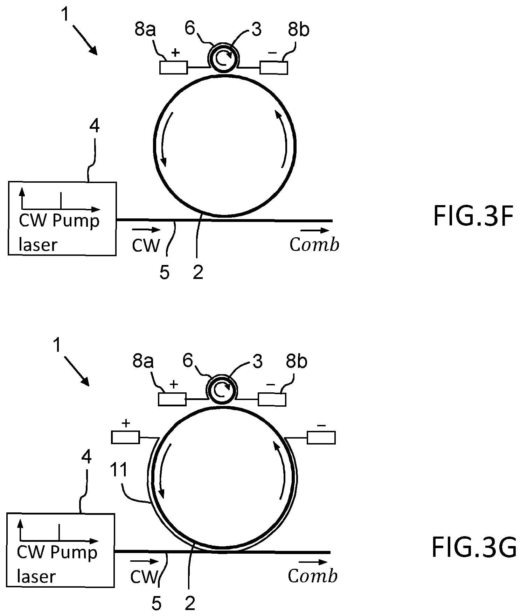

Figure 3F shows a comb similar to that of figure 3C, but with addition of an auxiliary heater 6 for enabling heating of the auxiliary resonator 3. The auxiliary heater 6 is used for tuning the resonance frequency of the auxiliary resonator 3. Consequently, by means of the auxiliary heater 6, the auxiliary resonator 3 may be tuned to induce the desired phase shift of a longitudinal mode of the main resonator 2. The thermal auxiliary heater 6 may for example be made of Au may be fabricated on top of the auxiliary microresonator for thermal tuning thereof. Specifically, thermal tuning may be accomplished by applying a voltage over the auxiliary heater via positive and negative terminals 8a, 8b, such that a current starts flowing there through and generating heat, as a resistive heater.

By means of the auxiliary heater 6, the auxiliary resonator 3 may be configured to be tuned to induce a phase shift to the pump frequency such that it has an effective detuning close to resonance centre.

With reference to figure 3G, each of the main and auxiliary resonators 2, 3 may be provided with a separate heater 6, 11 (auxiliary heater 6 and main heater 11) for enabling individual and separate tuning of the resonance frequency of main and auxiliary resonators 2, 3. This setup provides even better and more flexible tuning of the micrcomb. Furthermore, the setup of any embodiment shown with reference to figures 2A - 3F may of course alternatively be combined with an add-drop configuration, instead of the illustrated add-through configuration.

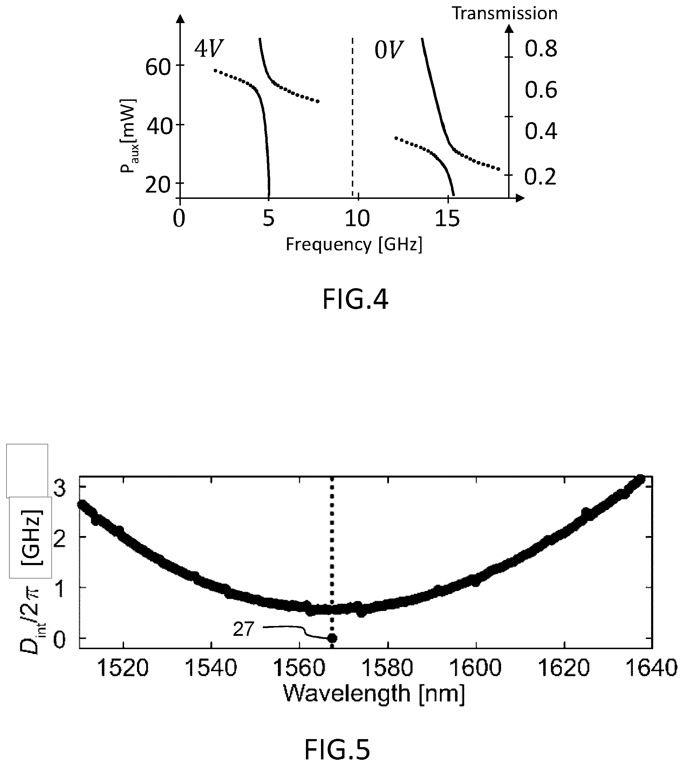

For our demonstration, we fabricated a device using a subtractive processing method for silicon nitride. The layout was similar to figure 3G, with all waveguides having a width of 1800 nm and a height of 740 nm. The main cavity has a radius of 227.82 micrometre [um], while for the auxiliary cavity is 23.32 micrometre [um], corresponding to free spectral ranges (FSRs) of 99.72 GHz and 970 GHz. The gap between rings is 500 nm, and 400 nm between the main cavity and the bus waveguide. Both cavities have a heater on top, which allows separate tuning of the resonance locations. Fig. 4 shows mode hybridization near 1566.3 nm. The minimum separation of the resonance split was 1.55 GHz. Fig. 5 shows the integrated dispersion of the main cavity, indicating that the pumped resonance is shifted due to the interaction with the auxiliary cavity. We find a group velocity dispersion coefficient *β*₂=-89 ps²/km. The average main cavity intrinsic Q factor (Qᵢ) is 8 million, and average extrinsic Q factor (Qₑₓ) is 3.2 million.

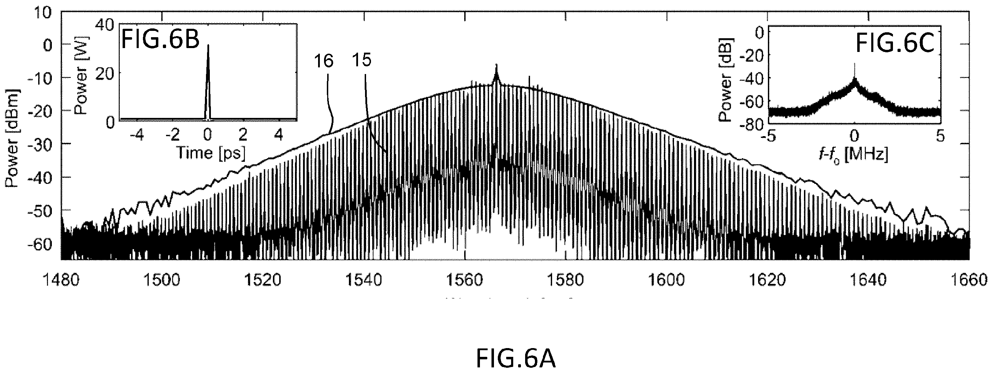

The device was pumped using an extemal-cavity tunable laser diode. The coupling losses are 3dB/facet. For the comb initiation we applied 11 mW of on-chip CW power. With the main heater voltage set to 0 V and 1.9V applied to the heater of the auxiliary cavity, a multi-soliton comb was initiated by tuning the laser into main-cavity resonance from the blue side towards the red. Increasing the auxiliary heater voltage slowly, we were able to reliably reduce the number of solitons until we reached a single soliton state. Then, we fine-tuned the laser frequency and increased the auxiliary heater voltage to 2.3 V. At this point, the auxiliary cavity was inducing a significant phase shift to the CW frequency, allowing a generation of DKS comb with >25% conversion efficiency. In the final step we attenuated the pump power down to 3.9 mW, reaching a DKS state with 52% conversion efficiency, and displayed in Fig. 6A. The conversion efficiency is calculated as the ratio of the comb power (excluding the pump line) to the pump power. We also measured the beat note from the electro-optic downconverted repetition rate, indicating a coherent and stable waveform.

The findings can be replicated by simulation. The simulation considers a main cavity with Qᵢ=10 million and Qₑₓ=2.5 million, and an auxiliary resonance with Qᵢ=1.2 million and Qₑₓ=50 million. The CW frequency is 267 MHz red detuned from the cold main resonance. The auxiliary resonance is detuned 1.876 GHz towards the blue side of the pump resonance. The nonlinear Kerr parameter is derived from a mode-solver as *γ*=0.9 (W·m)⁻¹. The input power, GVD coefficient and FSR values are identical to the measured parameters. The results are displayed in Fig. 6A, in outstanding agreement with the measured spectrum. An inset in the figure shows the simulated DKS circulating in the main cavity.

Figure 4 shows a measurement of the resonance split of the hybridized pumped mode in the main cavity output as a function of auxiliary heater voltage when either 0 V or 4 V are applied to the heater of the main cavity.

Figure 5 shows measured integrated dispersion of main cavity (blue) with second order fit (red). The dashed line indicates the location of the pumped resonance. The frequency shift is clearly visible in the integrated dispersion.

Fig. 6A. Measured (red) and simulated (blue) spectrum coupled from the main cavity to the bus waveguide. Figure 6B shows the simulated temporal waveform of the main cavity, and figure 6C shows a measurement of the downconverted repetition rate beat note (RBW=100 Hz).

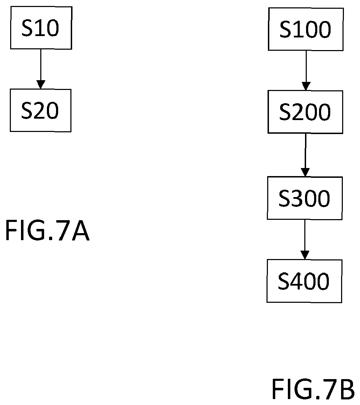

The disclosure also relates to a method for operating the optical resonator frequency comb according to the disclosure. The basic steps of the method is described below with reference to figure 7A. The method comprises a first step S10 of providing a continuous wave (cw) laser, a main optical resonator being made of a resonator material having a third order nonlinearity and an anomalous resonator dispersion, and an auxiliary optical element. The method further comprises a second step S20 of feeding cw laser light from the cw laser into an optical waveguide, which is coupled with the main optical resonator and forming a single dissipative soliton circulating in the main optical resonator corresponding to the generation of a frequency comb, while the auxiliary optical element induces a phase shift to a frequency comb component at the cw laser frequency to enhance the conversion efficiency of a generated frequency comb. Stated differently, the auxiliary optical element may be configured to induce a frequency shift to a longitudinal frequency mode of the main optical resonator associated with the cw laser frequency, thereby enhancing the conversion efficiency of a generated frequency comb.

The disclosure also relates to method for initiating the optical resonator frequency comb according to the disclosure, wherein the optical resonator frequency comb has a continuous wave (cw) laser, a main optical resonator being made of a resonator material having a third order nonlinearity and an anomalous resonator dispersion, an auxiliary optical element in form of an auxiliary resonator, and an auxiliary heater (6) for tuning of a resonance frequency of the auxiliary resonator. With reference to figure 7B, method comprises a first step S100 of feeding cw laser light into an optical waveguide using the cw laser and controlling operation of the auxiliary heater (6) for providing a multi-soliton comb in the main optical resonator. The method comprises a second step S200 of tuning the cw laser and the auxiliary heater (6) for reducing the number of solitons until a single dissipative soliton circulates in the main optical resonator corresponding to the generation of a frequency comb. Furthermore, the method comprises a third step S300 of increasing the power of the auxiliary heater (6) for inducing a phase shift to a frequency comb component at the cw laser frequency to enhance the conversion efficiency of a generated frequency comb, and thereafter a fourth step S400 attenuating the power of the cw laser light. Stated differently, the method comprises increasing the power of the auxiliary heater for inducing a frequency shift to a longitudinal frequency mode of the main optical resonator, the longitudinal frequency mode being associated with the cw laser frequency, and thereby enhancing the conversion efficiency of a generated frequency comb and thereafter a fourth step S400 attenuating the power of the cw laser light.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

## Claims

1. An optical resonator frequency comb (1), comprising:
a main optical resonator (2) being made of a resonator material, which has a third order nonlinearity and an anomalous resonator dispersion,
a continuous wave (cw) laser (4) configured for supplying continuous laser light into an optical waveguide (5), which is coupled with the main optical resonator,
wherein the cw laser (4), the optical waveguide (5) and the main optical resonator (2) are arranged for resonantly coupling the cw laser light into the main optical resonator (2) for forming a single dissipative soliton circulating in the main optical resonator (2) corresponding to the generation of a frequency comb,
**characterized in that** the optical resonator frequency comb further comprises an auxiliary optical element (3), being an auxiliary optical resonator (3) positioned adjacent to the main optical resonator (2) for being linearly coupled with the main optical resonator (2) during operation of the optical resonator frequency comb, the auxiliary optical resonator (3) configured to induce a perturbation to the main optical resonator (2) causing a frequency shift to a longitudinal frequency mode (21) of the main optical resonator (2) associated with the cw laser frequency, thereby enhancing the power conversion efficiency of a generated frequency comb.

2. The optical resonator frequency comb according to claim 1, wherein the auxiliary optical resonator (3) is configured to induce a frequency shift to only a limited portion of all longitudinal frequency modes of the main optical resonator.

3. The optical resonator frequency comb according to any of the preceding claims, wherein the auxiliary optical resonator (3) is configured to induce a frequency shift to at least one, but not all, longitudinal modes of the main resonator

4. The optical resonator frequency comb according to any of the preceding claims, wherein the auxiliary optical resonator (3) is configured to induce a frequency shift to not more than 30, specifically not more than 10, and more specifically not more than 3 longitudinal modes of the main resonator.

5. The optical resonator frequency comb according to any of the preceding claims, wherein the auxiliary optical resonator (3) is configured to induce a frequency shift to only one longitudinal mode of the main resonator.

6. The optical resonator frequency comb according to any of the preceding claims, wherein the main optical resonator (2) has a first free spectral range (FSR), wherein the auxiliary optical resonator (3) has a second free spectral range (FSR), wherein the second free spectral range is at least three times larger, specifically at least six times larger, and more specifically at least nine times larger, than the first free spectral range.

7. The optical resonator frequency comb according to any of the preceding claims, wherein the main optical resonator (2) has an annular form with a first diameter (D1) and the auxiliary optical resonator (3) has an annular form with a second diameter (D2), wherein the first diameter is at least three times larger, specifically at least six times larger, and more specifically at least nine times larger, than the second diameter.

8. The optical resonator frequency comb according to any of the preceding claims , wherein the main and auxiliary resonators (2, 3) have a mutual linear coupling during operation of the optical resonator frequency comb, such that the cw laser light being fed into the optical waveguide is resonant in both the main and auxiliary resonators.

9. The optical resonator frequency comb according to any of the preceding claims ,
wherein the auxiliary optical resonator (3) being made of a resonator material, which has a third order nonlinearity and an anomalous resonator dispersion, or
wherein the auxiliary optical resonator (3) being made of a resonator material having a normal resonator dispersion.

10. The optical resonator frequency comb according to any of the preceding claims, wherein the frequency comb includes a single continuous wave (cw) laser for powering the main resonator with laser light.

11. The optical resonator frequency comb according to any of the preceding claims ,
wherein at least the auxiliary resonator (3) is provided with an auxiliary heater (6) for enabling tuning of the resonance frequency of at least the auxiliary resonator, or
wherein each of the main and auxiliary resonators (2, 3) is provided with a separate heater (6, 11) for enabling individual and separate tuning of the resonance frequency of main and auxiliary resonators.

12. The optical resonator frequency comb according to any of the preceding claims , wherein the auxiliary resonator (3) is configured to be tuned to induce a frequency shift to the longitudinal frequency mode (21) of the main optical resonator (2) associated with the cw laser frequency such that it has an effective detuning close to resonance centre.

13. A method for operating an optical resonator frequency comb, comprising:
providing a continuous wave (cw) laser (4), a main optical resonator (2) being made of a resonator material having a third order nonlinearity and an anomalous resonator dispersion, and an auxiliary optical element (3) in form of an auxiliary resonator (3) positioned adjacent to the main optical resonator (2) for being linearly coupled with the main optical resonator (2) during operation of the optical resonator frequency comb,
feeding cw laser light from the cw laser into an optical waveguide (5), which is coupled with the main optical resonator (2) and forming a single dissipative soliton circulating in the main optical resonator corresponding to the generation of a frequency comb, **characterized by** inducing, by means of the auxiliary optical resonator (3), a perturbation to the main optical resonator (2) thus causing a frequency shift to a longitudinal frequency mode (21) of the main optical resonator (2) associated with the cw laser frequency, thereby enhancing power conversion efficiency of a generated frequency comb.

14. The method according to claim 13, wherein the method further comprises:, providing an auxiliary heater (6) for tuning of a resonance frequency of the auxiliary resonator (3),
controlling operation of the auxiliary heater (6) for providing a multi-soliton comb in the main optical resonator,
tuning the cw laser and the auxiliary heater (6) for reducing the number of solitons until the single dissipative soliton circulates in the main optical resonator,
increasing the power of the auxiliary heater (6) for inducing the frequency shift to the longitudinal frequency mode (21) of the main
optical resonator (2) associated with the cw laser frequency, and thereafter attenuating the power of the cw laser light.

## Patentansprüche

1. Frequenzkamm eines optischen Resonators (1), welcher Folgendes umfasst:
einen optischen Hauptresonator (2), der aus einem Resonatormaterial hergestellt ist, welches eine Nichtlinearität dritter Ordnung und eine anomale Resonatordispersion aufweist,
einen Dauerstrichlaser (CW-Laser - *Continuous Wave Laser*) (4), der zum Bereitstellen von kontinuierlichem Laserlicht in einen optischen Wellenleiter (5), welcher mit dem optischen Hauptresonator gekoppelt ist, konfiguriert ist,
wobei der CW-Laser (4), der optische Wellenleiter (5) und der optische Hauptresonator (2) zum resonanten Einkoppeln des CW-Laserlichts in den optischen Hauptresonator (2) geeignet sind, um ein einzelnes dissipatives Soliton zu erzeugen, das in dem optischen Hauptresonator (2) zirkuliert, was der Erzeugung eines Frequenzkamms entspricht,
**dadurch gekennzeichnet, dass** der Frequenzkamm eines optischen Resonators ferner ein optisches Hilfselement (3) umfasst, bei welchem es sich um einen optischen Hilfsresonator (3) handelt, der benachbart zu dem optischen Hauptresonator (2) positioniert ist, um während des Betriebs des Frequenzkamms eines optischen Resonators linear mit dem optischen Hauptresonator (2) gekoppelt zu werden, wobei der optische Hilfsresonator (3) zum Bewirken einer Störung des optischen Hauptresonators (2) konfiguriert ist, welche eine Frequenzverschiebung einer longitudinalen Frequenzmode (21) des optischen Hauptresonators (2) im Zusammenhang mit der CW-Laserfrequenz verursacht, wodurch die Leistungsumwandlungseffizienz eines erzeugten Frequenzkamms verbessert wird.

2. Frequenzkamm eines optischen Resonators nach Anspruch 1, wobei der optische Hilfsresonator (3) zum Bewirken einer Frequenzverschiebung nur bei einem begrenzten Teil aller longitudinalen Frequenzmoden des optischen Hauptresonators konfiguriert ist.

3. Frequenzkamm eines optischen Resonators nach einem der vorhergehenden Ansprüche, wobei der optische Hilfsresonator (3) zum Bewirken einer Frequenzverschiebung bei mindestens einer, jedoch nicht allen longitudinalen Moden des Hauptresonators konfiguriert ist.

4. Frequenzkamm eines optischen Resonators nach einem der vorhergehenden Ansprüche, wobei der optische Hilfsresonator (3) zum Bewirken einer Frequenzverschiebung bei nicht mehr als 30, insbesondere nicht mehr als 10 und noch genauer nicht mehr als 3 longitudinalen Moden des Hauptresonators konfiguriert ist.

5. Frequenzkamm eines optischen Resonators nach einem der vorhergehenden Ansprüche, wobei der optische Hilfsresonator (3) zum Bewirken einer Frequenzverschiebung bei nur einer longitudinalen Mode des Hauptresonators konfiguriert ist.

6. Frequenzkamm eines optischen Resonators nach einem der vorhergehenden Ansprüche, wobei der optische Hauptresonator (2) einen ersten freien Spektralbereich (FSR - *Free Spectral Range*) aufweist, wobei der optische Hilfsresonator (3) einen zweiten freien Spektralbereich (FSR) aufweist, wobei der zweite freie Spektralbereich mindestens drei Mal größer, insbesondere mindestens sechs Mal größer und noch genauer mindestens neun Mal größer als der erste freie Spektralbereich ist.

7. Frequenzkamm eines optischen Resonators nach einem der vorhergehenden Ansprüche, wobei der optische Hauptresonator (2) eine Ringform mit einem ersten Durchmesser (D1) aufweist und der optische Hilfsresonator (3) eine Ringform mit einem zweiten Durchmesser (D2) aufweist, wobei der erste Durchmesser mindestens drei Mal größer, insbesondere mindestens sechs Mal größer und noch genauer mindestens neun Mal größer als der zweite Durchmesser ist.

8. Frequenzkamm eines optischen Resonators nach einem der vorhergehenden Ansprüche, wobei der Haupt- und der Hilfsresonator (2, 3) während des Betriebs des Frequenzkamms eines optischen Resonators eine gegenseitige lineare Kopplung aufweisen, derart, dass das CW-Laserlicht, welches in den optischen Wellenleiter eingespeist wird, sowohl im Haupt- als auch im Hilfsresonator resonant ist.

9. Frequenzkamm eines optischen Resonators nach einem der vorhergehenden Ansprüche,
wobei der optische Hilfsresonator (3) aus einem Resonatormaterial hergestellt ist, welches eine Nichtlinearität dritter Ordnung und eine anomale Resonatordispersion aufweist, oder
wobei der optische Hilfsresonator (3) aus einem Resonatormaterial hergestellt ist, welches eine normale Resonatordispersion aufweist.

10. Frequenzkamm eines optischen Resonators nach einem der vorhergehenden Ansprüche, wobei der Frequenzkamm einen einzelnen Dauerstrichlaser (CW-Laser) zur Versorgung des Hauptresonators mit Laserlicht umfasst.

11. Frequenzkamm eines optischen Resonators nach einem der vorhergehenden Ansprüche,
wobei zumindest der Hilfsresonator (3) mit einem Zusatzheizelement (6) versehen ist, um eine Abstimmung der Resonanzfrequenz zumindest des Hilfsresonators zu ermöglichen, oder
wobei sowohl der Haupt- als auch der Hilfsresonator (2, 3) jeweils mit einem separaten Heizelement (6, 11) versehen ist, um eine individuelle und getrennte Abstimmung der Resonanzfrequenz des Haupt- und des Hilfsresonators zu ermöglichen.

12. Frequenzkamm eines optischen Resonators nach einem der vorhergehenden Ansprüche, wobei der Hilfsresonator (3) derart konfiguriert ist, dass er abgestimmt werden kann, um eine Frequenzverschiebung der longitudinalen Frequenzmode (21) des optischen Hauptresonators (2) im Zusammenhang mit der CW-Laserfrequenz zu bewirken, sodass er eine effektive Verstimmung nahe dem Resonanzzentrum aufweist.

13. Verfahren zum Betreiben eines Frequenzkamms eines optischen Resonators, welches Folgendes umfasst:
Bereitstellen eines Dauerstrichlasers (CW-Lasers) (4), eines optischen Hauptresonators (2), der aus einem Resonatormaterial mit einer Nichtlinearität dritter Ordnung und einer anomalen Resonatordispersion hergestellt ist, und eines optischen Hilfselementes (3) in Form eines Hilfsresonators (3), der benachbart zu dem optischen Hauptresonator (2) positioniert ist, um während des Betriebs des Frequenzkamms eines optischen Resonators linear mit dem optischen Hauptresonator (2) gekoppelt zu werden,
Einspeisen von CW-Laserlicht von dem CW-Laser in einen optischen Wellenleiter (5), welcher mit dem optischen Hauptresonator (2) gekoppelt ist, um ein einzelnes dissipatives Soliton zu erzeugen, das in dem optischen Hauptresonator zirkuliert, was der Erzeugung eines Frequenzkamms entspricht, **gekennzeichnet durch** das Bewirken, mithilfe des optischen Hilfsresonators (3), einer Störung des optischen Hauptresonators(2), welche eine Frequenzverschiebung einer longitudinalen Frequenzmode (21) des optischen Hauptresonators (2) im Zusammenhang mit der CW-Laserfrequenz verursacht, wodurch die Leistungsumwandlungseffizienz eines erzeugten Frequenzkamms verbessert wird.

14. Verfahren nach Anspruch 13, wobei das Verfahren ferner Folgendes umfasst:
Bereitstellen eines Zusatzheizelementes (6) zum Abstimmen einer Resonanzfrequenz des Hilfsresonators (3),
Steuern des Betriebs des Zusatzheizelementes (6) zum Bereitstellen eines Multi-Soliton-Kamms im optischen Hauptresonator,
Abstimmen des CW-Lasers und des Zusatzheizelementes (6) zur Verringerung der Anzahl der Solitone, bis das einzelne dissipative Soliton in dem optischen Hauptresonator zirkuliert,
Erhöhen der Leistung des Zusatzheizelementes (6) zum Bewirken der Frequenzverschiebung der longitudinalen Frequenzmode (21) des optischen Hauptresonators (2) im Zusammenhang mit der CW-Laserfrequenz, und danach Dämpfen der Leistung des CW-Laserlichts.

## Revendications

1. Peigne de fréquences à résonateur optique (1), comprenant :
un résonateur optique principal (2) étant constitué d'un matériau de résonateur, qui présente une non-linéarité du troisième ordre et une dispersion anormale du résonateur,
un laser à onde continue (cw) (4) configuré pour fournir une lumière laser continue dans un guide d'onde optique (5), qui est couplé au résonateur optique principal,
dans lequel le laser cw (4), le guide d'onde optique (5) et le résonateur optique principal (2) sont agencés pour coupler de manière résonante la lumière laser cw dans le résonateur optique principal (2) afin de former un soliton dissipatif unique circulant dans le résonateur optique principal (2), ce qui correspond à la génération d'un peigne de fréquences,
**caractérisé en ce que** le peigne de fréquences à résonateur optique comprend en outre un élément optique auxiliaire (3), qui est un résonateur optique auxiliaire (3) positionné de manière adjacente au résonateur optique principal (2) afin d'être couplé de manière linéaire avec le résonateur optique principal (2) pendant le fonctionnement du peigne de fréquences à résonateur optique, le résonateur optique auxiliaire (3) étant configuré pour induire une perturbation dans le résonateur optique principal (2) provoquant un décalage de fréquence d'un mode de fréquence longitudinal (21) du résonateur optique principal (2) associé à la fréquence du laser cw, améliorant ainsi le rendement de conversion de puissance d'un peigne de fréquences généré.

2. Peigne de fréquences à résonateur optique selon la revendication 1, dans lequel le résonateur optique auxiliaire (3) est configuré pour induire un décalage de fréquence uniquement sur une partie limitée de l'ensemble des modes de fréquence longitudinaux du résonateur optique principal.

3. Peigne de fréquences à résonateur optique selon l'une quelconque des revendications précédentes, dans lequel le résonateur optique auxiliaire (3) est configuré pour induire un décalage de fréquence sur au moins un, mais pas tous, des modes longitudinaux du résonateur principal.

4. Peigne de fréquences à résonateur optique selon l'une quelconque des revendications précédentes, dans lequel le résonateur optique auxiliaire (3) est configuré pour induire un décalage de fréquence sur au plus 30, plus précisément au plus 10, et plus spécifiquement au plus 3 modes longitudinaux du résonateur principal.

5. Peigne de fréquences à résonateur optique selon l'une quelconque des revendications précédentes, dans lequel le résonateur optique auxiliaire (3) est configuré pour induire un décalage de fréquence sur un seul mode longitudinal du résonateur principal.

6. Peigne de fréquences à résonateur optique selon l'une quelconque des revendications précédentes, dans lequel le résonateur optique principal (2) présente une première plage spectrale libre (FSR), dans lequel le résonateur optique auxiliaire (3) présente une seconde plage spectrale libre (FSR), et dans lequel la seconde plage spectrale libre est au moins trois fois plus grande, en particulier au moins six fois plus grande, et plus particulièrement au moins neuf fois plus grande, que la première plage spectrale libre.

7. Peigne de fréquences à résonateur optique selon l'une quelconque des revendications précédentes, dans lequel le résonateur optique principal (2) présente une forme annulaire avec un premier diamètre (D1) et le résonateur optique auxiliaire (3) présente une forme annulaire avec un second diamètre (D2), dans lequel le premier diamètre est au moins trois fois plus grand, en particulier au moins six fois plus grand, et plus particulièrement au moins neuf fois plus grand, que le second diamètre.

8. Peigne de fréquences à résonateur optique selon l'une quelconque des revendications précédentes, dans lequel le résonateur principal et le résonateur auxiliaire (2, 3) présentent un couplage linéaire mutuel pendant le fonctionnement du peigne de fréquences à résonateur optique, de telle sorte que la lumière laser cw injectée dans le guide d'onde optique est en résonance à la fois dans le résonateur principal et dans le résonateur auxiliaire.

9. Peigne de fréquences à résonateur optique selon l'une quelconque des revendications précédentes,
dans lequel le résonateur optique auxiliaire (3) est constitué d'un matériau de résonateur présentant une non-linéarité du troisième ordre et une dispersion de résonateur anormale, ou
dans lequel le résonateur optique auxiliaire (3) est constitué d'un matériau de résonateur présentant une dispersion de résonateur normale.

10. Peigne de fréquences à résonateur optique selon l'une quelconque des revendications précédentes, dans lequel le peigne de fréquences comprend un seul laser à onde continue (cw) destiné à alimenter le résonateur principal en lumière laser.

11. Peigne de fréquences à résonateur optique selon l'une quelconque des revendications précédentes,
dans lequel au moins le résonateur auxiliaire (3) est muni d'un dispositif de chauffage auxiliaire (6) permettant l'accord de la fréquence de résonance d'au moins le résonateur auxiliaire, ou
dans lequel chacun des résonateurs principal et auxiliaire (2, 3) est muni d'un dispositif de chauffage distinct (6, 11) permettant l'accord individuel et séparé de la fréquence de résonance des résonateurs principal et auxiliaire.

12. Peigne de fréquences à résonateur optique selon l'une quelconque des revendications précédentes, dans lequel le résonateur auxiliaire (3) est configuré pour être accordé de manière à induire un décalage de fréquence du mode de fréquence longitudinal (21) du résonateur optique principal (2) associé à la fréquence du laser cw, de telle sorte qu'il présente un désaccord effectif proche du centre de résonance.

13. Procédé de fonctionnement d'un peigne de fréquences à résonateur optique, comprenant :
la mise en place d'un laser à onde continue (cw) (4), d'un résonateur optique principal (2) constitué d'un matériau de résonateur présentant une non-linéarité du troisième ordre et une dispersion anormale du résonateur, et d'un élément optique auxiliaire (3) sous la forme d'un résonateur auxiliaire (3) positionné de manière adjacente au résonateur optique principal (2) afin d'être couplé de manière linéaire avec le résonateur optique (2) pendant le fonctionnement du peigne de fréquences à résonateur optique,
l'injection de lumière laser cw provenant du laser cw dans un guide d'onde optique (5), qui est couplé au résonateur optique principal (2), et la formation d'un soliton dissipatif unique circulant dans le résonateur optique principal, correspondant à la génération d'un peigne de fréquences, **caractérisé par** l'induction, au moyen du résonateur optique auxiliaire (3), d'une perturbation dans le résonateur optique principal (2), provoquant ainsi un décalage de fréquence d'un mode de fréquence longitudinal (21) du résonateur optique principal (2) associé à la fréquence du laser cw, améliorant ainsi le rendement de conversion de puissance d'un peigne de fréquences généré.

14. Procédé selon la revendication 13, dans lequel le procédé comprend en outre : la mise en place d'un dispositif de chauffage auxiliaire (6) destiné à accorder la fréquence de résonance du résonateur auxiliaire (3),
la commande du fonctionnement du dispositif de chauffage auxiliaire (6) pour produire un peigne à solitons multiples dans le résonateur optique principal,
l'accord du laser cw et du dispositif de chauffage auxiliaire (6) pour réduire le nombre de solitons jusqu'à ce qu'un seul soliton dissipatif circule dans le résonateur optique principal,
l'augmentation de la puissance du dispositif de chauffage auxiliaire (6) pour induire le décalage de fréquence vers le mode de fréquence longitudinale (21) du résonateur optique principal (2) associé à la fréquence du laser cw, puis l'atténuation de la puissance de la lumière laser cw.
